# EUROPÄISCHE PATENTSCHRIFT

(11) **EP 1 057 586 B1**
(45) Veröffentlichungstag und Bekanntmachung des Hinweises auf die Patenterteilung: **23.04.2003**
(21) Anmeldenummer: 00111200.2
(22) Anmeldetag: 24.05.2000
(51) Int. Cl.: B23Q 17/09, G01L 5/00

(54) **Werkzeug für die Umform-, Stanz- oder Spritzgusstechnik**
Tool for forming, punching or injection moulding
Outil de formage, poinçonnage ou moulage par injection

(30) Priorität: 02.06.1999 DE 19925458
(43) Veröffentlichungstag der Anmeldung: 06.12.2000
(73) Patentinhaber: Fraunhofer-Gesellschaft zur Förderung der angewandten Forschung e.V., 80636 München (DE)
(72) Erfinder: Dipl.Ing. Holger Lüthje, D-25469 Halstenbek (DE); Dr. Klaus Taube, D-22549 Hamburg (DE)
(74) Vertreter: Pfenning, Meinig & Partner

(56) Entgegenhaltungen:
- EP-A- 0 685 297
- EP-A- 0 789 234
- US-A- 5 176 450

## Beschreibung

Die vorliegende Erfindung bezieht sich auf ein Werkzeug für die Umform-, Stanz- oder Spritzgußtechnik gemäß Oberbegriff von Patentanspruch 1.

Im Bereich der spanlosen Verarbeitung werden zur Verminderung tribologischer Probleme vielfach verfahrensoptimierte Hilfsstoffe eingesetzt. Abgesehen von den damit verbundenen Kosten und Umweltbelastungen bietet der Einsatz verfahrensoptimierter Hilfsstoffe jedoch keinen vollständigen Schutz für die eingesetzten Werkzeuge, so daß es zu deren lokalem Verschleiß, beispielsweise durch Kaltverschweißung, Abrasion oder Oberflächenermüdung, kommen kann. In der spanlosen Verarbeitung setzt sich daher zunehmend durch, daß die Oberfläche der Werkzeuge mit einer dünnen, tribologisch optimierten Schicht zu versehen. Beispielsweise werden für unlegierte Tiefziehbleche erfolgreich TiN-Schichten eingesetzt, während bei Nichteisenmetallen mit CrN-Schichten überzeugende Verbesserungen erzielt wurden. Noch härtere Schichten aus TiCN werden mittlerweile erfolgreich bei der Umformung von hochlegierten Blechen eingesetzt. Neuere Entwicklungen weisen auf das hohe Eignungspotential von hochvernetzten Kohlenwasserstoff-Schichten hin, die sich derzeit jedoch noch in der Erprobungsphase befinden.

Bei der Verformung wird die Oberfläche der Werkzeuge extrem unterschiedlichen mechanischen und thermischen Belastungen ausgesetzt. Die Kenntnis dieser lokal auf die Oberfläche einwirkenden Kräfte, beispielsweise Zug-, Druck- oder Scherkräfte im Bereich von Ziehradien oder komplexen Formteilen, Oberflächenzugkräfte im Bereich des Niederhalters, würde bei der Gestaltung von Werkzeugen als auch bei der Prozeßführung neue Möglichkeiten der Maschinensteuerung eröffnen.

Beispielsweise offenbart die den nächstkommenden Stand der Technik beschreibenden EP 0 685 297 A1 ein Werkzeug für die Umform- und Zerspanungstechnik mit einer Sensorandordnung, wobei die Sensoren direkt auf der Verschleißfläche des Werkzeugs angeordnet sind. Die Sensoren bestehen dabei beispielsweise aus einer Isolationsschicht, sensorischen Metallschichten und Verschleißschutzschichten, wodurch ein mechanisch belastbarer geschlossener Schichtaufbau entsteht. Diese Schrift zeigt einen derartigen Aufbau lediglich für zerspanende Werkzeuge wie beispielsweise Wendeschneidplatten. Aus dieser Schrift ergibt sich jedoch keinerlei Hinweis für die Umform-, Stanz- oder Spritzgußwerkzeugen auftretenden Probleme. Denn letztere besitzen spezifische Formgebungen, so daß eine Kontaktierung und Auskopplung an der Funktionsoberfläche, wie in der EP 0 685 297 A1 beschrieben, nur sehr eingeschränkt in Frage kommen würde.

Die WO 87/04236 offenbart eine mechanische Komponente mit darauf in Dünnschichttechnik erzeugten elektrischen Schaltkreisen und Wandlern. Die DE 40 34 702.8 offenbart wiederum eine Vorrichtung zur Prüfung aktiver Werkzeuge von Gesenkbiegemaschinen und Biegestempel. Bei dieser Druckschrift wird die Höhe und die Schräge von Biegewerkzeugen mittels externer Sensoren erfaßt. Die Messung findet daher auch nicht während der Betriebsphase statt, sondern ohne Beanspruchung in der Ruhephase des Werkzeugs.

Aufgabe der vorliegenden Erfindung ist es daher, ein Werkzeug für die Umform-, Stanz- und Spritzgußtechnik zur Verfügung zu stellen, bei dem direkt und unmittelbar wichtige Verfahrensparameter wie beispielsweise Temperatur, Druck, Scherkraft und/oder Deformation lokal und kontinuierlich erfaßt werden können.

Weiterhin ist es Aufgabe der vorliegenden Erfindung ein Verfahren zur Herstellung derartiger Werkzeuge anzugeben.

Diese Aufgabe wird durch das Werkzeug nach Anspruch 1 sowie das Verfahren nach Anspruch 15 gelöst. Vorteilhafte Weiterbildungen des erfindungsgemäßen Werkzeuges und des erfindungsgemäßen Verfahrens werden in den abhängigen Ansprüchen gegeben.

Das erfindungsgemäße Werkzeug weist ein Modul auf, auf dessen Oberfläche eine Anordnung mehrerer Dünnschichtsensoren vorgesehen ist. Die Oberfläche des Moduls bildet dabei gemeinsam mit der Funktionsoberfläche des Werkzeugs eine einzige durchgehende angepaßte Oberfläche, die an die Werkzeugkontur angepaßt ist. Durch diese Anordnung ist es möglich, lokal und an mehreren Stellen zugleich und auch kontinuierlich verschiedene Parameter wie beispielsweise Temperatur, Druck, Scherkraft und/oder Deformation des Werkzeugs zu bestimmen. Bei dem erfindungsgemäßen Werkzeug ist bei Einsatz des Verschleißsensors auch die Erfassung von Verschleiß des Werkzeugs selbst möglich. Dies ermöglicht beispielsweise den Verschleiß des Werkzeugs kontinuierlich aufzuzeichnen und so ohne weitere Stichprobennahme zum richtigen Zeitpunkt das Werkzeug auszutauschen. Die Werkzeuge für die Umform-, Stanzoder Spritzgußtechnik besitzen sehr unterschiedliche Formen und Ausdehnungen. Sie reichen von einfachen Stempeln mit Zylindergeometrien und Abmessungen im Millimeterbereich bis zu tonnenschweren Formen mit Abmessungen im Quadratmeterbereich. Bei Anwendung dieser Werkzeuge sind die lokalen, mechanischen und thermischen Belastungen sehr unterschiedlich und insbesondere bei komplexer Werkzeuggeomtrie nicht einfach meßbar oder gar vorhersehbar. Dies führt in der Praxis zu Schädigungen der Werkzeuge und/oder der damit hergestellten Formkörper.

Das erfindungsgemäße Werkzeug weist nun ein integrierbares Modul auf, das eine direkte Messung und Kontrolle des Zustandes der Werkzeuge und deren Belastung ermöglicht. Erfindungsgemäß wird eine modulare Lösung vorgeschlagen, die aus einem mechanischen Grundkörper besteht, der in das Werkzeug eingebaut werden kann und der auf seiner, dem zu verformenden Material zugewandten Oberfläche eine Anordnung mehrerer Dünnschichtsensoren aufweist.

Die Module werden dabei so gefertigt, daß sie auf einfache Weise in das Umformwerkzeug eingebaut werden können. So kann beispielsweise das Modul als Drehteil ausgestaltet werden, das in geeignete Rezesse in dem Werkzeug kraftschlüssig und/oder formschlüssig mit dem Werkzeug verbunden wird. Ein Verdrehen des Moduls kann mit Hilfe sonstiger aus dem Stand der Technik bekannter Lösungen einfach verhindert werden.

Vorteilhafterweise weisen die Module weiterhin Schaltungen zur Versorgung der Sensoren einschließlich geeigneter elektrischer und/oder optischer Leitungen und auch Kontakte zur Versorgung der Schaltung und Auskopplung der Signale auf.

Die Module können auch eine Signalübertragungs- und Signalvorverarbeitungsschaltung aufweisen, wobei die Energieversorgung und die Signalübertragung vorzugsweise elemetrisch erfolgt.

Die Ausgestaltung und Formgebung der erfindungsgemäßen Module kann sehr unterschiedlich sein. Während bei kleineren Werkzeugen vorzugsweise zylindrische Formen verwandt werden, die kraftschlüssig und/oder formschlüssig in das Werkzeug integriert werden, können bei großen Werkzeugen auch die erfindungsgemäßen Module die Form von Teilsegmenten der Werkzeuge darstellen.

Der Grundkörper des Moduls kann weiterhin aus demselben Material gefertigt werden wie das Werkzeug.

Die Oberflächengestaltung der erfindungsgemäßen Module kann mit demselben Verfahren erfolgen, wie die Oberflächengestaltung der Werkzeuge selbst. Um für hochpräzise Applikationen Module herzustellen, wird das Modul bereits in einer frühen Stufe der Werkzeugherstellung in das Werkzeug eingebaut und im Rahmen der Werkzeugformgebung gemeinsam mit dem Werkzeug an der Oberfläche bearbeitet. Vorteilhafterweise besteht in diesem Fall das Modul aus dem gleichen Material wie das Werkzeug selbst. Das Modul wird anschließend ausgebaut und mit der Sensor-Dünnschichtstruktur versehen. Da diese eine Dicke im Mikrometer-Bereich aufweist, entsteht so ein der Werkzeugkontur und dessen sonstigen Eigenschaften perfekt angepaßtes Modul.

Mit dem erfindungsgemäßen Werkzeug ist es möglich, Temperatur, Verschleiß, Deformation und Kraft direkt und ortsaufgelöst zu messen sowie in Vernetzung mit mikrosystemtechnischen Schaltungen sowie geeigneten Maschinensteuerungen zur betriebsoptimierten Steuerung der Maschine eingesetzt zu werden. Die mit der schichtechnologisch integrierten Sensorik ausgestatteten Werkzeuge werden dadurch in die Lage versetzt, den Belastungsgrad und den jeweiligen Zustand ihrer funktionsoptimierten Oberfläche zu konzentrieren und einer Zerstörung entgegenzuwirken bzw. den Grad des Verschleißzustandes kontinuierlich zu erfassen.

Die erfindungsgemäßen Dünnschichtsensoren bestehen vorteilhafterweise aus einer Isolationsschicht, die auf dem Grundkörper des Moduls aufgebracht ist, einer darüberliegenden sensorischen Schicht, die ihrerseits von einer weiteren Funktionsschicht bedeckt ist. Diese Funktionsschicht bildet gemeinsam mit der Funktionsschicht des Werkzeugs selbst eine gemeinsame Oberfläche. Die Funktionsschicht des Moduls kann zusätzlich noch durch weitere Schichten zwischen der Sensorschicht und der Funktionsschicht von der Sensorschicht isoliert werden.

Zur Strukturierung der Sensorelemente können moderne laserlithographische Verfahren angewandt werden, die auch eine Strukturierung auf dreidimensionalen Bauteilen ermöglichen. Alternativ können auch der Formgebung anpaßbare photolithographische Verfahren verwendet werden. Die Sensoren (Wandler) können in unterschiedlicher Weise realisiert werden. Z.B. werden zur Messung der lokalen Temperatur resistive Meßprinzipien bevorzugt, welche ermöglichen, auch weitere Zustandsgrößen mit Hilfe von Widerstandsänderung zu erfassen.

Die erfindungsgemäßen Module können mit unterschiedlichen Sensoren in Dünnfilmtechnik auf der Oberfläche ausgestattet sein. So können neben der lokalen Temperatur auch beispielsweise Druck-, Kraft-, Verschleißund/oder Dehnungssensoren eingesetzt werden. Für letztere eignen sich insbesondere bekannte Dehnungsmeßbrücken oder auch piezoresistive Dünnschichtsensoren.

Die Sensoren können in sehr kleinen Strukturen, beispielsweise in der Form von Arrays oder Netzwerken über die Oberfläche des Moduls verteilt sein. Eine vorteilhafte Ausgestaltung der Erfindung verwendet Multifunktionssensoren, die aus einem Schichtmaterial durch angepaßte Formgebung der Sensor- und Leiterstruktur erzeugt werden können.

Da heutzutage bereits hochbeanspruchte Maschinenbauteile und Werkzeuge mit einer funktionsoptimierten tribologischen Beschichtung versehen werden, können die erfindungsgemäßen Sensoren mit nur geringem zusätzlichen Aufwand in das Werkzeug integriert werden. Die entsprechenden Beschichtungsverfahren basieren auf CVD- und PVD-Techniken. Die einzelnen Schichten der Sensoren weisen eine Dicke zwischen 1 µm und 10 µm auf.

Das gesamte Schichtsystem der Dünnschichtsensorik des Moduls, einschließlich der funktionell optimierten Moduloberfläche, kann in einem Prozeß hergestellt und die Strukturierung direkt mit einem Laserstrahl durchgeführt werden. In diesem Falle können die Aufwendungen für die Photolithographie und Ätzung ebenso anfallen wie weitere Vakuumbeschichtungsprozesse. Dadurch wird der Aufwand zur Integration der sensorischen Strukturen erheblich verringert.

Diese Möglichkeit besteht beispielsweise potentiell bei den diamantähnlichen, auf Kohlenstoff basierenden amorphen Schichtsystemen (DLC oder Me:DLC), die neben hervorragend tribologischen Eigenschaften auch interessante elektrische, optische und magnetische Eigenschaften aufweisen. Kohlenstoffbasierte Schichtsysteme sind vorteilhaft im Bereich bis ca. 250 °C einsetzbar und finden daher eine zunehmende Anwendung in verschiedenen Bereichen der Umformtechnik.

Die Eigenschaften der einzelnen Schichten lassen sich auf einfache Weise durch entsprechende Variationen der Herstellungsverfahrensparameter einstellen. So besitzen reine und mit Silizium dotierte Kohlenstoffschichten gute dielektrische Eigenschaften und können als Isolator eingesetzt werden mit einem spezifischen Widerstand von 10⁶ bis 10¹² Ω/cm. Die Zugabe von Metallen führt zu elektrisch leitenden Schichten, wobei der spezifische Widerstand über Art und Gehalt der eingebauten Metalle in weiten Grenzen gesteuert werden kann (ρ ≈ 10⁻⁵ bis 10⁰ cm).

Zur Strukturierung derartiger amorpher diamantartiger Schichten können neben den genannten lithographischen Verfahren auch die genannten Laserstrahlverfahren eingesetzt werden. Dabei kann die Absorption der Laserstrahlung grundsätzlich selektiv durch die Metalldotierung und die Wellenlänge der Strahlung eingestellt werden.

Im folgenden werden einige Beispiele für erfindungsgemäße Werkzeuge gegeben werden.

Es zeigen
- Figur 1: ein Umformwerkzeug;
- Figur 2: den Aufbau eines Moduls;
- Figur 3: ein Umformwerkzeug im Einsatz und dessen Aufbau;
- Figur 4: ein weiteres Umformwerkzeug und
- Figur 5: ein weiteres Umformwerkzeug.

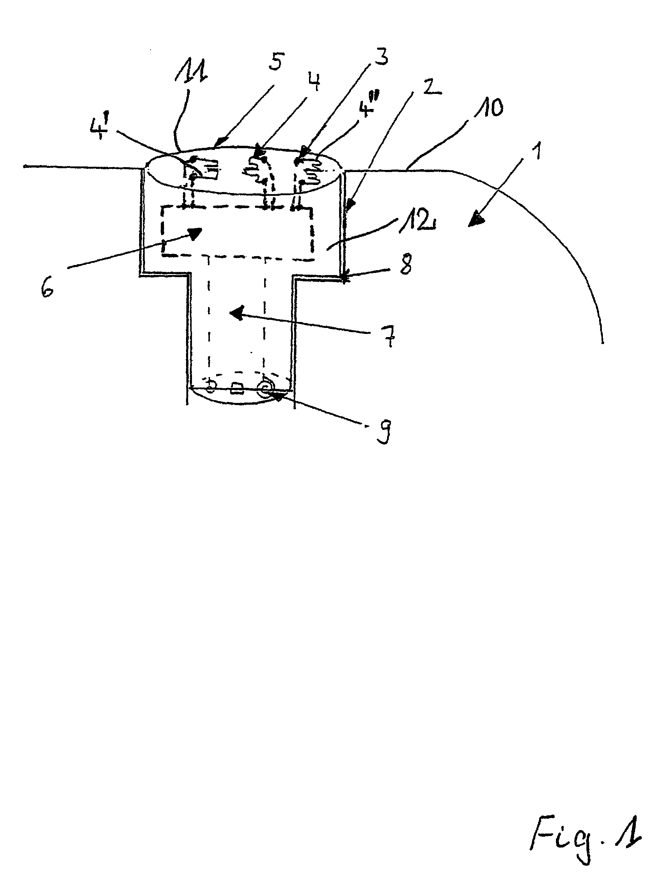

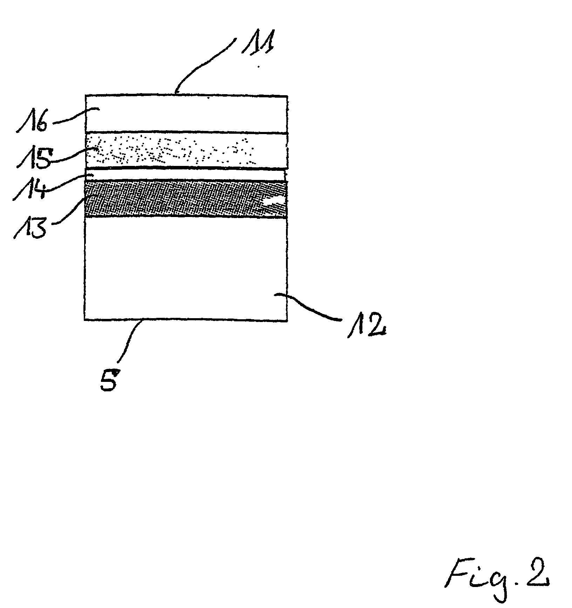

Figur 1 zeigt ein Umformwerkzeug 1 mit einer funktionellen Oberfläche 10. In das Umformwerkzeug ist eine Bohrung 2 eingebracht, in die ein Sensormodul 5 eingedreht ist. Das Sensormodul besitzt einen Grundkörper 12 und eine Oberfläche 11, wobei die Oberfläche 11 mit der Oberfläche 10 formschlüssig abschließt. In die Oberfläche 11 sind drei Temperatursensoren 4, 4' und 4'' nebeneinander eingebracht. Diesen Temperatursensoren kann nun lokal aufgelöst und kontinuierlich die Temperatur des Moduls 5 und damit des Werkzeugs 1 an den Oberflächen 10 und 11 überwacht werden. Die Sensoren 4, 4', 4'' sind über Durchkontaktierungen 3 mit einer gestrichelt eingezeichneten elektrischen Schaltung 6 zur Auswertung der erfaßten Meßsignale und weiterhin mit einer Telemetrieschaltung 7 verbunden. Die Telemetrieschaltung 7 gibt die ausgewerteten Signale über Koppelstrukturen 9 an eine außerhalb des Moduls angeordnete Auswerteschaltung weiter.

Über die Kopplungsstrukturen 9 werden auch die Sensoren 4, 4'' und 4''' sowie die Schaltungen 6 und 7 mit elektrischer Energie versorgt.

Die Bohrung 2 in dem Werkzeug 10 weist weiterhin eine Passung 8 auf, so daß das entsprechend ausgeformte Modul 5 in dem Werkzeug gesichert gehaltert ist.

Figur 2 zeigt den Aufbau eines Moduls 5, wie es auch in Figur 1 dargestellt ist. Das Modul 5 weist einen Grundkörper 12 auf, auf dem eine Isolationsschicht 13, eine sensorische Schicht 14, eine weitere Isolationsschicht 15 und auf dieser eine funktionelle tribologische Oberflächenschicht 16 aufgebracht sind. Die Oberflächenschicht 16 bildet dabei die funktionelle Oberfläche 11 des Moduls, die in gleicher Weise wie die Oberfläche des Werkzeuges der Formung dient und daher ebenfalls mit entsprechenden Kräften beaufschlagt wird. Die Funktionsschicht besteht dabei aus Titannitrid oder Chromnitrid und bildet den Abschluß des Schichtsystems. Das Beschichtungsverfahren zur Herstellung des Moduls ist in diesem Falle so koordiniert, daß das gesamte System in zwei Prozessen hergestellt wird, zuzüglich der erforderlichen Strukturierung der sensorischen Ebene. Da auf das Schichtsystem extreme mechanische und thermische Belastungen einwirken, müssen die einzelnen Schichten und die dazu verwendeten Herstellungsverfahren so konzipiert werden, daß der gesamte Schichtaufbau eine schichttechnologische Einheit darstellt, die sowohl materialspezifisch als auch morphologisch optimiert ist.

Die sensorische Schicht 14 kann dabei vorteilhafterweise so strukturiert werden, daß sie eine piezoresistive und/oder piezoelektrische Schicht ist und der Erzeugung von Druck und/oder temperaturbezogenen Messungen dient.

Figur 3 zeigt einen Stempel 20 mit einem Sensormodul 5, wobei das Sensormodul 5 in die druckbeaufschlagte Oberfläche des Stempels 20 eingebracht ist. Wie in Figur 3A zu erkennen ist, wird dieser Stempel 20 auf ein Werkstück 21 gedrückt, das über einem Gesenk 22 angeordnet ist. In diesem Falle ist es mittels des Moduls 5 möglich, die genauen Druck- und Kraftverhältnisse an der Stempeloberfläche des Stempels 20 zu erfassen.

Figur 3B zeigt einen Ausschnitt aus der Hauptbelastungszone eines derartigen Stempels, wobei hier der Ausschnitt genommen wurde, der das Modul 5 enthält. Auf der Moduloberfläche des Moduls 5 sind dabei zwei Verschleißsensoren 23, 23' und mittig zu diesen ein Temperatursensor 4 angeordnet. Die Verschleißsensoren 23, 23' bestehen aus einzelnen Widerstandsbahnen 23a bis 23e bzw. 23'a bis 23'e. Diese sind so ausgestaltet, daß mit zunehmendem Verschleiß der Moduloberfläche 11 beginnend mit den Widerstandsbahnen 23e bzw. 23'e die einzelnen Widerstandsbahnen durchtrennt werden und so eine Verschleißanzeige gegeben ist.

Letztlich ist es so möglich, verteilt über die Oberfläche des Moduls 5 und bei Anwendung mehrerer Module 5 über die Oberfläche des Werkzeugs 20 auch über die gesamte Oberfläche 10 des Werkzeugs 20 den Verschleiß der Werkzeugoberfläche während des Einsatzes des Werkzeuges exakt zu erfassen.

Figur 4 zeigt ein weiteres Beispiel für ein Werkzeug 1, das eine Bohrung 2 zur Aufnahme eines Sensormoduls 5 aufweist. Das Sensormodul 5 hat eine zylindrische Form und schließt mit seiner Oberfläche 11 formschlüssig mit der Oberfläche 10 des Werkzeugs 1 ab. Die Bohrung 2 ist dabei durch das gesamte Werkzeug geführt, so daß das Modul 5 rückseitig über die als Kontaktöffnung 17 dienende Bohrung 2 mit elektrischer Energie versorgt und die erfaßten Meßwerte von dem Modul zu einer Auswerteeinheit abgeleitet werden können.

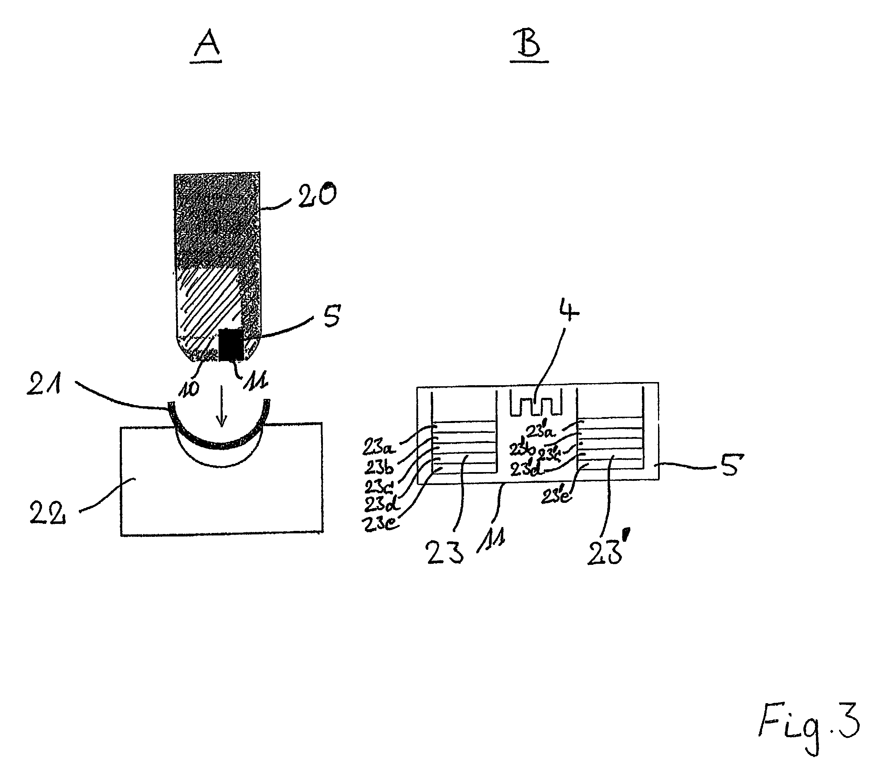

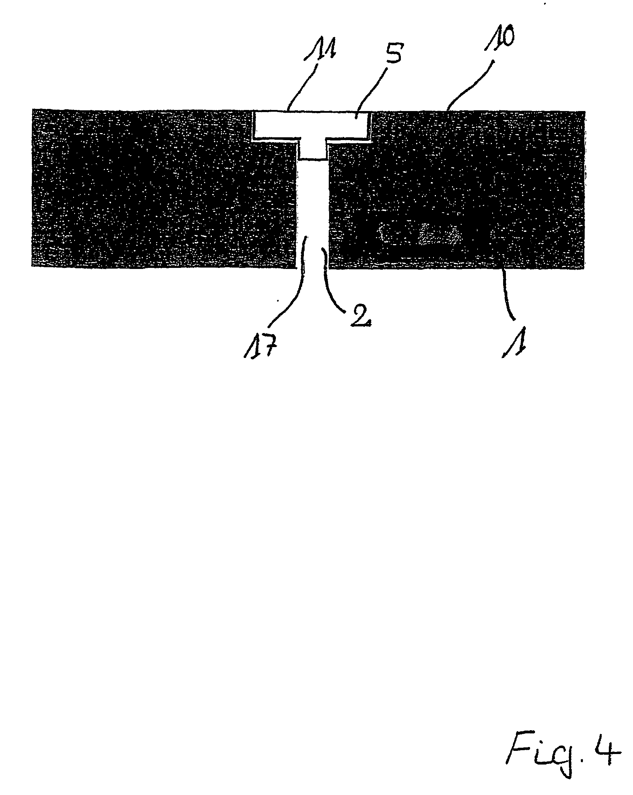

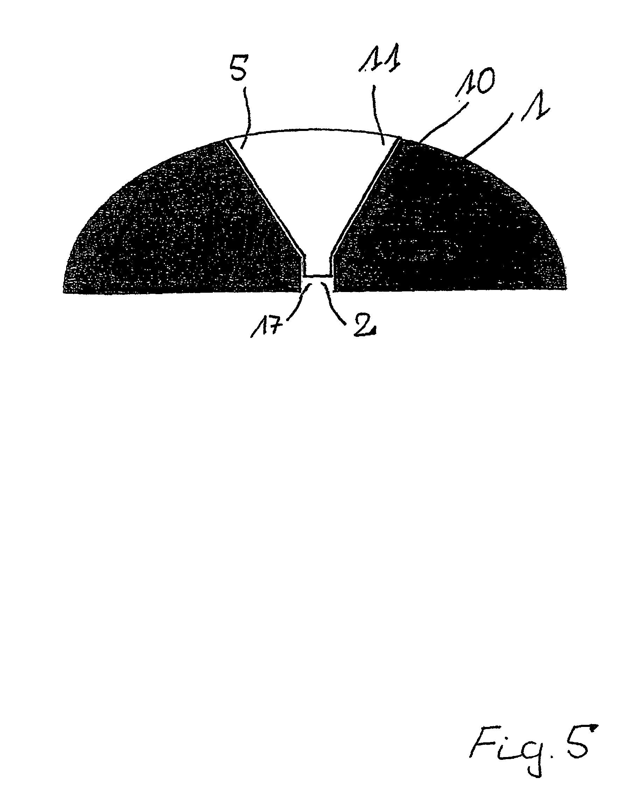

Figur 5 zeigt ein weiteres Beispiel eines Werkzeuges 1, das hier jedoch eine gekrümmte Oberfläche 10 aufweist. In diese Oberfläche 10 und in das Werkzeug 1 ist eine Bohrung 2 eingebracht, die einen konischen Querschnitt aufweist und ebenfalls sich bis zur Rückseite des Werkzeugs 1 fortsetzt. In diese Bohrung 2 ist ein Sensormodul 5 eingebracht, das eine angepaßte konische Form aufweist und dessen Oberfläche 11 in gleicher Weise wie die Oberfläche 10 des Werkzeugs 1 gekrümmt ist. Hier ergibt sich wiederum die Möglichkeit, daß Modul 5 rückseitig über die als Kontaktöffnung 17 ausgeführte Bohrung 2 zu kontaktieren, um den Sensoren in dem Modul 5 Energie zuzuführen und deren Meßwerte nach außen abzuleiten.

Durch das erfindungsgemäße modulare Konzept ist es nunmehr möglich, auf einfache Art und Weise Werkzeuge für die Umform-, Stanz- und Spritztechnik mit flächenverteilten Sensoren zu versehen, um lokal aufgelöst und kontinuierlich verschiedene Zustandsparameter des Werkzeugs 1 zu erfassen. Dies ist aufgrund der modularen Bauweise besonders kostengünstig und einfach durchzuführen.

## Patentansprüche

1. Werkzeug (1) für die Umform-, Stanz- oder Spritzgußtechnik mit einer Funktionsoberfläche (10), mit einer in der Ebene der Funktionsoberfläche (10) flächenhaften Anordnung mehrerer Dünnschichtsensoren
**gekennzeichnet durch**
ein Modul (5) mit einem in das Werkzeug kraft- und formschlüssig integrierbaren Grundkörper (12), wobei der Grundkörper (12) eine Modul-Oberfläche (11), die im eingebauten Zustand in die Funktionsoberfläche (10) des Werkzeugs (1) eingebettet und an diese angepaßt ist, aufweist und die Dünnschichtsensoren in der Modul-Oberfläche angeordnet sind.

2. Werkzeug nach dem vorhergehenden Anspruch, **dadurch gekennzeichnet, daß** die Dünnschichtsensoren jeweils eine elektrisch isolierende Schicht (13), eine tribologische Schicht (16), die die Oberfläche des Moduls bildet, sowie eine sensorische Schicht (14), die zwischen der elektrisch isolierenden Schicht und der tribologischen Schicht angeordnet ist, aufweist.

3. Werkzeug nach dem vorhergehenden Anspruch, **dadurch gekennzeichnet, daß** zwischen der sensorischen Schicht und der Funktionsschicht eine weitere elektrisch isolierende Schicht (15) angeordnet ist.

4. Werkzeug nach einem der vorhergehenden Ansprüche, **dadurch gekennzeichnet, daß** die Dünnschichtsensoren weitere Zwischen-, Haft- und/oder Diffussionssperrschichten aufweisen.

5. Werkzeug nach einem der vorhergehenden Ansprüche, **dadurch gekennzeichnet, daß** mehrere der Dünnschichtsensoren eine gemeinsame isolierende Schicht, eine gemeinsame tribologische Schicht und/oder eine gemeinsame sensorische Schicht aufweisen.

6. Werkzeug nach einem der Ansprüche 2 bis 5, **dadurch gekennzeichnet, daß** die sensorische Schicht ein Dünnschichtsensorelement enthält.

7. Werkzeug nach einem der Ansprüche 2 bis 6, **dadurch gekennzeichnet, daß** die sensorische Schicht eine Dehnungsmeßbrücke, einen piezoelektrischen Dünnschichtsensor und/oder einen piezoresistiven Dünnschichtsensor als Dünnschichtsensorelement enthält.

8. Werkzeug nach einem der vorhergehenden Ansprüche, **dadurch gekennzeichnet, daß** die Moduloberfläche Me:DLC, Titannitrid und/oder Chromnitrid enthält.

9. Werkzeug nach einem der vorhergehenden Ansprüche, **dadurch gekennzeichnet, daß** die Dünnschichtsensoren Temperatursensoren, Kraftsensoren, Drucksensoren, Deformationssensoren und/oder Verschleißsensoren sind.

10. Werkzeug nach einem der vorhergehenden Ansprüche, **dadurch gekennzeichnet, daß** der Grundkörper (12) eine Vorrichtung zur Signalübertragung und/oder eine Vorrichtung zur Signalverarbeitung und/oder eine Vorrichtung zur Energieversorgung der Dünnschichtsensoren aufweist, die mit den Dünnschichtsensoren galvanisch oder nichtgalvanisch verbunden sind.

11. Werkzeug nach dem vorhergehenden Anspruch, **dadurch gekennzeichnet, daß** die Vorrichtung zur Signalübertragung und/oder die Vorrichtung zur Signalverarbeitung und/oder die Vorrichtung zur Energieversorgung mit den Dünnschichtsensoren mittels Durchkontaktierungen verbunden sind.

12. Werkzeug nach einem der vorhergehenden Ansprüche, **dadurch gekennzeichnet, daß** der Grundkörper (12) eine Vorrichtung zur induktiven, kapazitiven und/oder optischen Energieübertragung von einer Vorrichtung zur Energieversorgung zu den Dünnschichtsensoren und/oder Meßsignalübertragung von den Dünnschichtsensoren zu einer Vorrichtung zur Signalübertragung oder einer Vorrichtung zur Signalverarbeitung aufweist.

13. Werkzeug nach einem der vorhergehenden Ansprüche, **dadurch gekennzeichnet, daß** der Grundkörper (12) zylinderförmig ist.

14. Werkzeug nach einem der vorhergehenden Ansprüche, **dadurch gekennzeichnet, daß** der Grundkörper die Form eines Teilsegmentes des Werkzeuges (1) aufweist.

15. Verfahren zur Herstellung eines Werkzeugs nach einem der vorhergehenden Ansprüche, wobei
der Grundkörper (12) als Modul (5) in das Werkzeug (1) eingefügt wird und seine Oberfläche (11) gemeinsam mit der Oberfläche (10) des Werkzeugs vor bearbeitet wird
und anschließend auf den Grundkörper, gegebenenfalls im ausgebauten Zustand, mittels Dünnschichttechniken eine Isolationsschicht gefolgt von mindestens einer Sensorschicht sowie eine Funktionsschicht aufgebracht wird, wobei die Schichten durch bekannte Strukturierungsverfahren jeweils vor Aufbringung der folgenden Schicht strukturiert werden.

16. Verfahren nach dem vorhergehenden Anspruch, **dadurch gekennzeichnet, daß** vor oder nach der Erzeugung der Schichten in den Grundkörper in den Grundkörper Durchkontaktierungen eingebaut werden.

## Claims

1. Tool (1) for forming, stamping or injection moulding, having a functional surface (10) with a two-dimensional arrangement of a plurality of thin layer sensors in the plane of the functional surface (10), **characterized by** a module (5) having a basic body (12) that can be integrated into the tool with a force fit and a form fit, the basic body (12) having a module surface (11) which, when installed, is embedded in the functional surface (10) of the tool (1) and is matched to the latter, and the thin layer sensors are arranged in the module surface.

2. Tool according to the preceding claim, **characterized in that** the thin layer sensors each have an electrically insulating layer (13), a tribological layer (16), which forms the surface of the module, and a sensory layer (14), which is arranged between the electrically insulating layer and the tribological layer.

3. Tool according to the preceding claim, **characterized in that** between the sensory layer and the functional layer there is arranged a further electrically insulating layer (15).

4. Tool according to one of the preceding claims, **characterized in that** the thin layer sensors have further intermediate, adhesive and/or diffusion barrier layers.

5. Tool according to one of the preceding claims, **characterized in that** a plurality of the thin layer sensors have a common insulating layer, a common tribological layer and/or a common sensory layer.

6. Tool according to one of Claims 2 to 5, **characterized in that** the sensory layer contains a thin layer sensor element.

7. Tool according to one of Claims 2 to 6, **characterized in that** the sensory layer contains a strain measuring bridge, a piezoelectric thin layer sensor and/or a piezoresistive thin layer sensor as a thin layer sensor element.

8. Tool according to one of the preceding claims, **characterized in that** the module surface contains Me:DLC, titanium nitride and/or chromium nitride.

9. Tool according to one of the preceding claims, **characterized in that** the thin layer sensors are temperature sensors, force sensors, pressure sensors, deformation sensors and/or wear sensors.

10. Tool according to one of the preceding claims,
**characterized in that** the basic body (12) has a device for signal transmission and/or a device for signal processing and/or a device for the power supply of the thin layer sensors, which have a DC connection or a non-DC connection to the thin layer sensors.

11. Tool according to the preceding claim, **characterized in that** the device for signal transmission and/or the device for signal processing and/or the device for power supply are connected to the thin-layer sensors by means of plated-through contacts.

12. Tool according to one of the preceding claims, **characterized in that** the basic body (12) has a device for the inductive, capacitive and/or optical transfer of power from a device for the power supply to the thin layer sensors, and/or for the transmission of measured signals from the thin layer sensors to a device for signal transmission or a device for signal processing.

13. Tool according to one of the preceding claims, **characterized in that** the basic body (12) is cylindrical.

14. Tool according to one of the preceding claims, **characterized in that** the basic body has the form of a part segment of the tool (1).

15. Method of producing a tool according to one of the preceding claims, the basic body (12) being introduced into the tool (1) as a module (5) and its surface (11) being premachined together with the surface (10) of the tool, and the basic body, possibly in the dismantled state, then having applied to it by means of thin layer techniques an insulation layer followed by at least one sensor layer and a functional layer, the layers being structured by means of known structuring methods in each case before the application of the following layer.

16. Method according to the preceding claim, **characterized in that** before or after the production of the layers in the basic body, plated-through contacts are incorporated in the basic body.

## Revendications

1. Outil (1) destiné à la technique de formage, de poinçonnage ou de moulage par injection avec une surface fonctionnelle (10) comprenant un aménagement de plusieurs capteurs à couche mince s'étendant à plat dans le plan de la surface fonctionnelle (10), **caractérisé par** un module (5) comprenant un corps de base (12) intégrable à l'outil par voie mécanique et à force, le corps de base (12) présentant une surface modulaire (11) qui est noyée à l'état encastré dans la surface fonctionnelle (10) de l'outil (1) et est adaptée à celle-ci, et les capteurs à couche mince étant aménagés dans la surface modulaire.

2. Outil selon la revendication précédente, **caractérisé en ce que** les capteurs à couche mince présentent respectivement une couche isolante électrique (13), une couche tribologique (16), qui forme la surface du module, ainsi qu'une couche sensorielle (14) qui est agencée entre la couche isolante électrique et la couche tribologique.

3. Outil selon la revendication précédente, **caractérisé en ce qu'**une autre couche isolante électrique (15) est agencée entre la couche sensorielle et la couche fonctionnelle.

4. Outil selon l'une quelconque des revendications précédentes, **caractérisé en ce que** les capteurs à couche mince présentent d'autres couches intermédiaires, adhésives et/ou barrières à la diffusion.

5. Outil selon l'une quelconque des revendications précédentes, **caractérisé en ce que** plusieurs des capteurs à couche mince présentent une couche isolante commune, une couche tribologique commune et/ou une couche sensorielle commune.

6. Outil selon l'une quelconque des revendications 2 à 5, **caractérisé en ce que** la couche sensorielle contient un élément de capteur à couche mince.

7. Outil selon l'une quelconque des revendications 2 à 6, **caractérisé en ce** la couche sensorielle contient une jauge de contrainte, un capteur à couche mince piézoélectrique et/ou un capteur à couche mince piézorésistif comme élément de capteur à couche mince.

8. Outil selon l'une quelconque des revendications précédentes, **caractérisé en ce que** la surface modulaire contient du Me:DLC, du nitrure de titane et/ou du nitrure de chrome.

9. Outil selon l'une quelconque des revendications précédentes, **caractérisé en ce que** les capteurs à couche mince sont des capteurs de température, des capteurs de force, des capteurs de pression, des capteurs de déformation et/ou des capteurs d'usure.

10. Outil selon l'une quelconque des revendications précédentes, **caractérisé en ce que** le corps de base (12) présente un dispositif pour la transmission de signaux et/ou un dispositif pour le traitement de signaux et/ou un dispositif pour l'alimentation en énergie des capteurs à couche mince, qui sont connectés aux capteurs à couche mince par voie galvanique ou non galvanique.

11. Outil selon la revendication précédente, **caractérisé en ce que** le dispositif pour la transmission de signaux et/ou le dispositif pour le traitement de signaux et/ou le dispositif pour l'alimentation en énergie sont connectés aux capteurs à couche mince au moyen d'interconnexions.

12. Outil selon l'une quelconque des revendications précédentes, **caractérisé en ce que** le corps de base (12) présente un dispositif pour la transmission d'énergie inductrice, capacitive et/ou optique d'un dispositif d'alimentation en énergie aux capteurs à couche mince et/ou pour la transmission de signaux de mesure des capteurs à couche mince à un dispositif pour la transmission de signaux ou à un dispositif pour le traitement de signaux.

13. Outil selon l'une quelconque des revendications précédentes, **caractérisé en ce que** le corps de base (12) a une forme cylindrique.

14. Outil selon l'une quelconque des revendications précédentes, **caractérisé en ce que** le corps de base présente la forme d'un segment partiel de l'outil (1).

15. Procédé de fabrication d'un outil selon l'une quelconque des revendications précédentes, dans lequel le corps de base (12) est inséré comme module (5) dans l'outil (1) et sa surface (11) est prétraitée conjointement avec la surface (10) de l'outil et, ensuite, sur le corps de base, éventuellement à l'état démonté, on applique au moyen de techniques à couche mince une couche isolante suivie d'au moins une couche de capteurs ainsi qu'une d'une couche fonctionnelle, les couches étant texturées par des procédés de texturation connus respectivement avant application de la couche suivante.

16. Procédé selon la revendication précédente, **caractérisé en ce que**, avant ou après la production des couches dans le corps de base, on ménage des interconnexions dans celui-ci.
